Europäisches Patentamt

European Patent Office

Office européen des brevets

(19)

(11) Veröffentlichungsnummer: **0 011 698**
**B1**

(12) # EUROPÄISCHE PATENTSCHRIFT

(45) Veröffentlichungstag der Patentschrift:
24.03.82

(51) Int. Cl.³: **B 60 C 17/04**

(21) Anmeldenummer: 79103846.6

(22) Anmeldetag: 08.10.79

(54) **Notlaufring für Fahrzeug-Luftreifen.**

(30) Priorität: **27.11.78 DE 2851187**

(43) Veröffentlichungstag der Anmeldung:
**11.06.80 Patentblatt 80/12**

(45) Bekanntmachung des Hinweises auf die Patenterteilung:
**24.03.82 Patentblatt 82/12**

(84) Benannte Vertragsstaaten:
**BE FR GB IT LU NL SE**

(56) Entgegenhaltungen:
**DE-A-2 712 242**
**DE-A-2 817 394**
**FR-A-2 085 827**
**FR-A-2 095 392**
**FR-A-2 095 396**
**FR-A-2 178 114**
**FR-A-2 185 515**
**FR-A-2 283 789**
**US-A-2 040 645**
**EP 79 103 846**

(73) Patentinhaber: **VORWERK & SOHN GmbH. & Co. KG.,**
**Obere Lichtenplatzer Strasse 336,**
**D-5600 Wuppertal-Barmen (DE)**

(72) Erfinder: **Stein, Hermann, Scharpenacker Weg 12,**
**D-5600 Wuppertal-Barmen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG.

## Notlaufring für Fahrzeugluftreifen

Die Erfindung betrifft einen aus Gummi oder anderen Elastomeren bestehenden Notlaufring in schlauchlosen, auf Flachbettfelgen aufgezogenen Luftreifen für Kraftfahrzeuge, der mit seinem den Raum zwischen den Reifenwülsten einnehmenden Fussteil auf der Felge aufsitzt und an seiner der Felge abgewandten Seite mit einem in umlaufenden Rillen untergebrachten Schmiermittel versehen ist, welches infolge von Luftdruckverlust im Reifen durch den Druck der Reifendecke auf den Notlaufring freigesetzt wird und zur Schmierung zwischen die sich berührenden Flächen des Luftreifens und des Notlaufringes gelangt.

Ein Luftreifen kann durch äussere Einwirkungen derart beschädigt werden, dass er schlagartig seine Luft verliert. Dabei verliert der Reifenfuss seinen festen Sitz auf der Felge, was zur Folge hat, dass das Fahrzeug vor allem seine Richtungsstabilität und Lenkbarkeit einbüsst. In solchen Fällen würde beim Weiterfahren die auf die Felge sich absenkende Reifendecke eine starke Reibung erzeugen, die nach einer kurzen Fahrstrecke die vollständige Zerstörung des defekten Reifens sowie eine erhebliche Beschädigung der Felge herbeiführen würde. Um jedoch zu erreichen, dass der defekte Reifen für eine absehbare Fahrstrecke bis zum Reifenwechsel benutzbar bleibt, wird ein Notlaufring der vorgenannten Art eingesetzt, welcher bewirkt, dass der Reifenfuss in seiner Position gehalten und die Felge gegen den luftdrucklosen Reifen abgestützt wird.

Durch die DE-A Nr. 2817394 ist ein als Notlaufring vorgesehenes Stützteil für die Laufdecke eines Fahrzeugluftreifens bekanntgeworden, das aus zwei an der Innenwand des aufgepumpten Reifens anliegenden Ringteilen besteht, welche sich über radial angeordnete Speichen am Bett der Radfelge abstützen. Die Ringteile sind als zum Reifeninneren hin offene U-förmige Nuten ausgebildet, die zur Aufnahme von mit einem Schmiermittel gefüllten Kapseln dienen. Diese Kapseln werden in den Nuten lediglich durch einen kleinen, am freien Ende des der Lauffläche des Reifens zugewandten und zu dieser im wesentlichen parallel verlaufenden Nutschenkels angeordneten Wulst gehalten und sollen bei einer Reifenpanne infolge des dann von der Reifendecke auf die Ringteile einwirkenden Druckes zerbrochen werden, so dass das Schmiermittel freigegeben wird. Es muss jedoch bezweifelt werden, ob dieses System bei Eintritt einer Reifenpanne tatsächlich funktioniert. Denn bereits bei normaler Beanspruchung des unbeschädigten Reifens wird der äussere, zum Zwecke des leichten Eindrückens gezielt dünnwandig gehaltene Nutschenkel aufgrund der Fliehkraft nach aussen zum Reifen hin gedrückt, so dass sich die Nuten aufspreizen und die Kapseln herausgeschleudert werden. Für den Fall einer später entstehenden Notlaufsituation steht dann das Schmiermittel für die vorgesehene Reibungsminderung zwischen Notlaufring und Reifen nicht mehr zur Verfügung. Aber auch wenn unterstellt wird, dass die Kapseln bis zum Eintritt der Notlaufsituation wie vorgesehen in den Nuten festgehalten werden, so wird das aus den zerquetschten Kapseln austretende Schmiermittel nicht in der gewünschten Weise zwischen die Ringteile und die Reifendecke gelangen, sondern nach unten in den felgennahen, von den Speichen des Stützteils durchsetzten Raum fliessen, da die Reifendecke nicht ganzflächig, sondern durch die Abstützung an den Ringteilen nur streifenförmig mit dem Stützteil in Berührung kommt und weil überdies wegen der Orientierung der Nutöffnungen zur Reifenmitte hin eine Zwangsführung fehlt, die das austretende Schmiermittel direkt zwischen die Berührungsflächen von Reifendecke und Stützteil leiten würde.

Ausserdem ist es durch die FR-A Nr. 2178114 bekannt, das für den Notlauf eines defekten Luftreifens vorgesehene Schmiermittel in umlaufenden Rillen eingeschlossen zu halten und diese Rillen am Reifen selbst, und zwar am Inneren der Seitenwände anzuordnen. Dabei werden die Rillen während des normalen Gebrauchs des aufgepumpten Reifens allein durch den auf dessen Seitenwände einwirkenden Innendruck geschlossen gehalten. Diese Konzeption macht es erforderlich, den Luftdruck des Reifens so zu bemessen, dass die Seitenwände auch bei maximaler Belastung des Reifens und unter Berücksichtigung der während der Fahrt auftretenden Walkarbeit ihre Normallage beibehalten, das heisst nicht in der Weise einknicken, dass zwischen jeder Rille und dem Reifeninnenraum ein Öffnungsspalt entsteht, durch den das Schmiermittel austreten kann. Demzufolge lässt sich bei einem unbeschädigten Reifen dieser Art eine unerwünschte Freigabe des Schmiermittels nur durch Aufrechterhaltung eines bestimmten, relativ hohen Innendrucks vermeiden, der nicht unterschritten werden darf. Zugleich bedeutet dies aber, dass dieser Reifen bezüglich seines Innendrucks weder einer sehr geringen Belastung, beispielsweise bei unbeladenem Fahrzeug, noch solchen Fahrbahngegebenheiten angepasst werden kann, die einen verhältnismässig niedrigen Reifendruck verlangen. Denn bereits bei leicht vermindertem Luftdruck werden die Rillen geöffnet: Das Schmiermittel gelangt in den Reifeninnenraum, wo es sich dank der Zentrifugalkraft punktell an der Reifenwandung festsetzt und nach erfolgter Erkaltung eine Umwucht des bereiften Rades verursacht. Abgesehen davon dürfte es technisch ausserordentlich schwierig, wenn nicht sogar unmöglich sein, derartige Rillen an der Seitenwand des Reifens herzustellen. Ausserdem werden durch derartige Rillen, deren Tiefe 70% der maximalen Dicke der Seitenwand betragen kann, die Seitenwände des Reifens unzulässig stark geschwächt und mit Kerben versehen, die die Stabilität des Reifens erheblich beeinträchtigen.

Der vorliegenden Erfindung liegt die Aufgabe zugrunde, einen Notlaufring der eingangs genannten Art zu schaffen, der sicherstellt, dass seine das Schmiermittel enthaltenden Rillen erst dann geöffnet werden, um das Schmiermittel zum Zwecke einer wesentlichen Minderung der Reibung zwischen dem defekten Reifen und dem Notlaufring freizugeben, wenn der Reifeninnendruck auf einen Wert abgesunken ist, der unter dem die Funktionsfähigkeit des intakten Reifens gewährleistenden Minimalwert liegt.

Diese Aufgabe wird erfindungsgemäss dadurch gelöst, dass die Rillen in an sich bekannter Weise mittels Dichtlippen verschliessbar sind und bei intaktem Luftreifen durch dessen Innendruck sowie durch eine axiale Vorspannung geschlossen gehalten werden und dass mindestens eine umlaufende hinterschnittene Ausnehmung vorhanden ist, deren die Hinterschneidung bildende, elastisch federnde Zungen als Hebelkraftarme dienen, welche bei Druckbeaufschlagung durch die Reifendecke zum Boden der Ausnehmung hin gedrückt werden und dadurch die als Hebellastarme mit ihnen verbundenen Dichtlippen in eine das Schmiermittel freigebende Öffnungsstellung überführen.

Der erfindungsgemässe Notlaufring ist hinsichtlich der Formgebung und Materialverteilung so konzipiert, dass nicht nur seine axiale Vorspannung sowie der Reifeninnendruck, sondern zusätzlich auch die im Fahrbetrieb entstehende Zentrifugalkraft einen Schliessdruck auf die schmiermittelgefüllten Rillen ausübt. Aus diesem Grunde kann ein mit diesem Notlaufring bestückter intakter Luftreifen auch mit geringstmöglichem Luftdruck gefahren werden, ohne dass das Schmiermittel vor Eintritt der Notlaufsituation freigesetzt wird. Im Falle einer Reifenpanne besitzt der erfindungsgemässe Notlaufring den Vorteil, dass er sich mit der Reifendecke vollflächig berührt und das freiwerdende Schmiermittel zwangsläufig zwischen die Berührungsflächen gelangt ohne in einen anderen Raum ausweichen zu können. Ausserdem zeichnet sich dieser Notlaufring dadurch aus, dass er dem defekten Reifen einen festen Sitz auf der Felge sichert.

In zwei Ausführungsbeispielen des Erfindungsgegenstandes ist der Notlaufring so gestaltet, dass er zur Mitte hin leicht ansteigt und eine mittig angeordnete, umlaufende hinterschnittene Ausnehmung aufweist, wobei deren vorstehende Zungen als Hebelkraftarme ausgebildet sind und deren seitliche Fortsätze die Dichtlippen der mit Schmiermittel gefüllten Rillen bilden und als Hebellastarme dienen. Während bei der einen Ausführung die schmiermittelgefüllten Rillen an den Aussenseiten des Notlaufrings angebracht sind und deren Dichtlippen an der Innenwand des Reifens anliegen, sind bei der anderen Ausführung die Rillen jeweils zwischen der Aussenseite des Notlaufrings und der mittigen umlaufenden Ausnehmung angeordnet, wobei die Dichtlippen aufgrund der bei der Reifenmontage erzeugten seitlichen Vorspannung jeweils einen aus der Rille in den Reifeninnenraum führenden Schmiermittel-Austrittskanal abdichten.

Eine weitere Ausführung des Notlaufringes, die vor allem bei Reifen mit einem extrem breiten Reifenfuss eingesetzt wird, besitzt zwei umlaufende hinterschnittene Ausnehmungen, wobei deren vorstehende Zungen als Hebelkraftarme ausgebildet sind und deren seitliche Fortsätze ebenfalls die Dichtlippen der schmiermittelführenden Rillen bilden und als Hebellastarme dienen.

Weitere Merkmale und vorteilhafte Ausgestaltungen des Notlaufrings gemäss der Erfindung werden nachfolgend anhand der Zeichnung näher erläutert. Es zeigt:

Fig. 1 einen in einem Luftreifen montierten Notlaufring im Querschnitt,

Fig. 2 eine zweite Ausführungsform eines Notlaufrings vor der Montage im Querschnitt,

Fig. 3 denselben Notlaufring im montierten Zustand im Querschnitt, und

Fig. 4 eine dritte Ausführungsform eines Notlaufrings im montierten Zustand im Querschnitt.

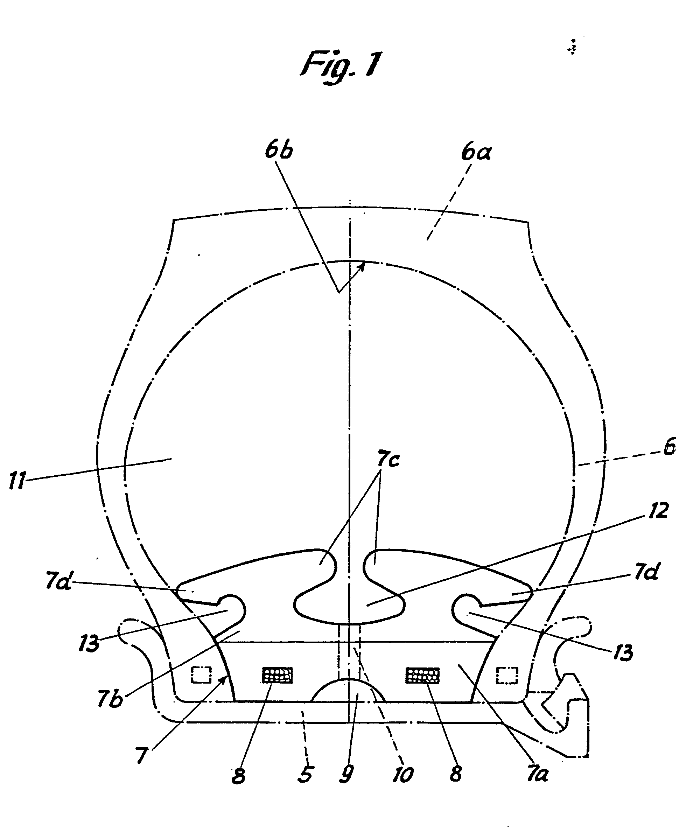

Der auf einer Flachbettfelge 5 in einen schlauchlosen Luftreifen 6 eingebrachte Notlaufring 7, 14, 16 gemäss der Erfindung besteht aus einem Ring aus Gummi oder anderen Elastomeren. Der Notlaufring 7 gemäss Fig. 1 besitzt einen Fussteil 7a und einen an diesen sich anschliessenden Oberteil 7b. Der Fussteil 7a ist durch zwei oder mehrere Stahldrahtbündel 8 verstärkt, die dem Notlaufring 7 einen festen Sitz auf der Flachbettfelge 5 verschaffen. Zur weiteren Sicherung seines Sitzes auf der Flachbettfelge 5 kann der Fussteil 7a aus einem Elastomer bestehen, welches härter ist als das für den Oberteil 7b verwendete. Auf seiner Unterseite weist der Fussteil 7a eine umlaufende Ausnehmung 9 auf, von der aus mehrere über den Ringumfang verteilte Durchlasskanäle 10 zum Reifeninnenraum 11 führen. Dieses Kanalsystem gewährleistet beim Aufpumpen des Luftreifens 6 ein einwandfreies Einströmen der Luft vom Ventil in den Reifeninnenraum 11.

Bei den Notlaufringen 7 und 14 gemäss den Fig. 1, 2 und 3 steigt der Oberteil 7b zur Mitte hin leicht an und weist eine mittig angeordnete, umlaufende und hinterschnittene Ausnehmung 12 auf, die in ihrer Kontur einem auf dem Kopf stehenden Pilz gleicht. Durch diese hinterschnittene Ausnehmung 12 sind zwei Zungen 7c gebildet, die nach beiden Seiten hin in Dichtlippen 7d übergehen, welche, wie aus Fig 1 ersichtlich ist, an der Innenwand 6b des Luftreifens 6 anliegen. Die Dichtlippen 7d begrenzen mit ihrer Unterseite jeweils eine im Oberteil 7b befindliche umlaufende Rille 13, die hinterschnitten und zur Innenwand 6b des Luftreifens 6 hin offen ist. Beide Rillen 13 werden vor der Montage mit einem pastösen bis wachsartigen Schmiermittel gefüllt. Die nach der Reifenmontage eingepumpte Luft drückt die beiden Dichtlippen 7d fest gegen die Innenwand 6b des Luftreifens 6, wodurch ein Austreten des Schmiermittels verhindert wird. Verliert der Luftreifen 6 durch äussere Einwirkung die Luft, so senkt sich die Reifendecke 6a nach unten bis auf die beiden Zungen 7c des Notlaufringes 7 und drückt diese in die Ausnehmung 12 hinein, wobei eine Hebelwirkung auf die Dichtlippen 7d ausgeübt wird, und zwar derart, dass diese angehoben werden und das bei Betriebstemperaturen des Reifens von über 40° C sich verflüssigende Schmiermittel zur Herabsetzung der zwischen der Innenwand 6b des Luftreifens 6 und der Oberfläche des Notlaufrings 7 entstehenden Reibung freigeben.

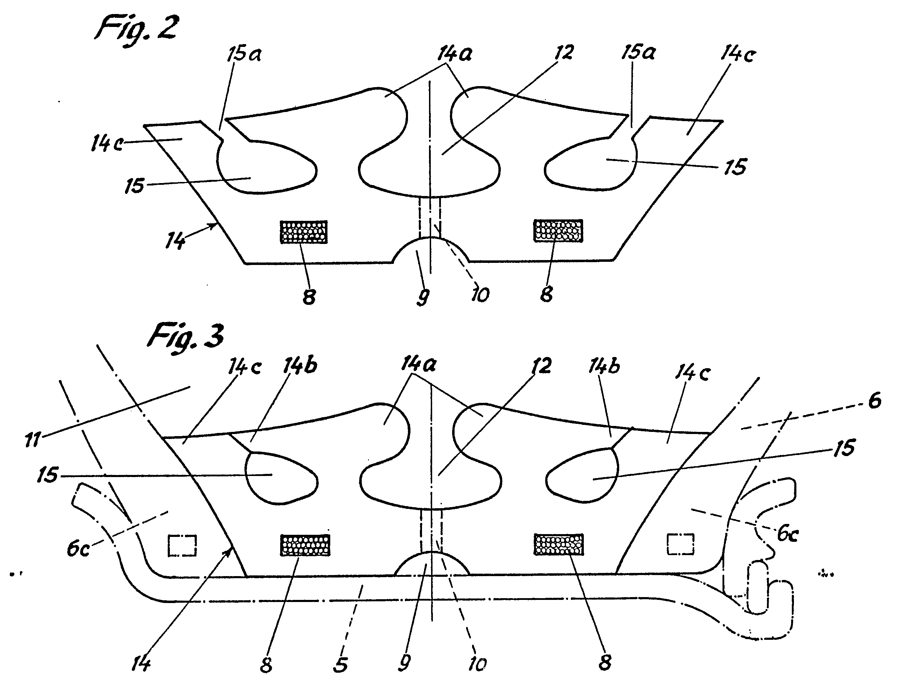

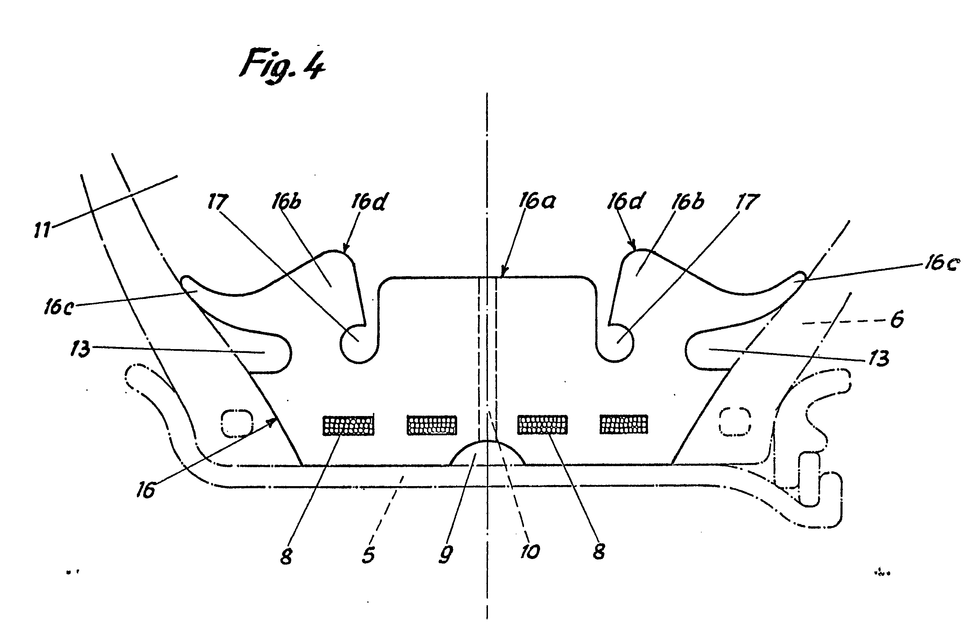

Bei dem in den Fig. 2 und 3 gezeigten Notlaufring 14 ist das Prinzip des Öffnens der schmiermittelgefüllten Rillen durch Hebelwirkung ebenfalls verwirklicht. Im Unterschied zu den Notlaufringen 7 und 16 gemäss den Fig. 1 und 4, bei denen sich die Rillen 13 an der Aussenflanke befinden, sind die das Schmiermittel enthaltenden Rillen 15 des Notlaufringes 14 im Ringinneren jeweils zwischen einer Aussenflanke und der mittigen umlaufenden Ausnehmung 12 angeordnet. Die Rillen 15 sind durch einen Schmiermittel-Austrittskanal 15a nach oben hin offen, wie aus Fig. 2 hervorgeht, in welcher der Notlaufring 14 im entspannten Zustand vor der Montage dargestellt ist. Wird der Notlaufring 14 in den Luftreifen 6 eingebracht, so ergibt sich eine von den Innenseiten des Luftreifens 6 in Höhe der Reifenwülste 6c auf die Randzonen 14c des Notlaufrings 14 einwirkende Vorspannung, die das Schliessen der Schmiermittel-Austrittskanäle 15a hervorruft. Bei Luftverlust des Luftreifens drückt die Innenwand der Reifendecke auf die Zungen 14a, wodurch infolge Hebelwirkung die Dichtlippen 14b angehoben und die Austrittskanäle 15a geöffnet werden, so dass das Schmiermittel aus den Rillen 15 austreten kann.

Um auch bei Luftreifen mit sehr breiten Felgen eine einwandfreie Hebelwirkung auf die Dichtlippen 16c zwecks Freigabe des Schmiermittels zu erreichen, wird, wie in Fig. 4 dargestellt, erfindungsgemäss ein Notlaufring 16 eingesetzt, der beiderseits seiner Längsmitte je eine hinterschnittene Ausnehmung 17 besitzt. Zwischen den beiden Ausnehmungen 17 erstreckt sich ein flacher, das heisst zum Bett der Flachbettfelge 5 parallel verlaufender Rücken 16a, der nicht so weit in den Reifeninnenraum 11 hineinragt wie die Zungen 16b mit ihren Oberkanten 16d. Aufgrund dieser Ausbildung des Notlaufrings 16 werden die Zungen 16b beim Luftverlust des Reifens von der Reifendecke in die Ausnehmungen 17 eingedrückt, wodurch die Dichtlippen 16c aus ihrer in Fig. 4 gezeigten Schliessstellung von der Innenwand des Luftreifens 6 abgehoben werden. Aus den auf diese Weise geöffneten Rillen 13 tritt nunmehr das Schmiermittel heraus und gelangt zum Zwekke der Reibungsminderung zwischen die sich berührenden Teile des Luftreifens 6 und des Notlaufrings 16.

Als Schmiermittel sind solche Stoffe einzusetzen, die weder eine quellende noch eine andere schädigende Wirkung auf Elastomere ausüben, wie zum Beispiel Polyglykole oder Salze von Fettsäuren.

Patentansprüche

1. Aus Gummi oder anderen Elastomeren bestehender Notlaufring (7, 14, 16) in schlauchlosen, auf Flachbettfelgen (5) aufgezogenen Luftreifen (6) für Kraftfahrzeuge, der mit seinem den Raum zwischen den Reifenwülsten (6c) einnehmenden Fussteil (7a) auf der Felge aufsitzt und an seiner der Felge abgewandten Seite mit einem in umlaufenden Rillen (13, 15) untergebrachten Schmiermittel versehen ist, welches infolge von Luftdruckverlust im Reifen (6) durch den Druck der Reifendecke (6a) auf den Notlaufring freigesetzt wird und zur Schmierung zwischen die sich berührenden Flächen des Luftreifens und des Notlaufringes gelangt, dadurch gekennzeichnet, dass die Rillen (13, 15) in an sich bekannter Weise mittels Dichtlippen (7d, 14b, 16c) verschliessbar sind und bei intaktem Luftreifen (6) durch dessen Innendruck sowie durch eine axiale Vorspannung geschlossen gehalten werden und dass mindetens eine umlaufende hinterschnittene Ausnehmung (12, 17) vorhanden ist, deren die Hinterschneidung bildende, elastisch federnde Zungen (7c, 14a, 16b) als Hebelkraftarme dienen, welche bei Druckbeaufschlagung durch die Reifendecke (6a) zum Boden der Ausnehmung hin gedrückt werden und dadurch die als Hebellastarme mit ihnen verbundenen Dichtlippen (7d, 14b, 16c) in eine das Schmiermittel freigebende Öffnungsstellung überführen.

2. Notlaufring nach Anspruch 1, dadurch gekennzeichnet, dass die schmiermittelgefüllten Rillen (13) an den Aussenseiten des Notlaufrings (7, 16) angebracht sind, wobei die Dichtlippen (7d, 16c) an der Innenseite des Luftreifens (6) anliegen.

3. Notlaufring nach Anspruch 1, dadurch gekennzeichnet, dass die schmiermittelgefüllten Rillen (15) jeweils zwischen der Aussenseite des Notlaufrings (14) und der mittigen umlaufenden Ausnehmung (12) angeordnet sind, wobei die Dichtlippen (14b) mit den Randzonen (14c) des Notlaufrings (14) aufgrund der bei der Reifenmontage erzeugten seitlichen Vorspannung jeweils einen aus der Rille (15) in den Reifeninnenraum (11) führenden Schmiermittel-Austrittskanal (15a) abdichten.

4. Notlaufring nach Anspruch 1, dadurch gekennzeichnet, dass zwei umlaufende hinterschnittene Ausnehmungen (17) vorgesehen sind, wobei deren jeweils vorstehende Zungen (16b) als Hebelkraftarme ausgebildet sind und deren seitliche Fortsätze die Dichtlippen (16c) der schmiermittelführenden Rillen (13) bilden und als Hebellastarme dienen.

5. Notlaufring nach den Ansprüchen 1 und 3, dadurch gekennzeichnet, dass die mittig angeordnete umlaufende Ausnehmung (12) im Querschnitt etwa die Form eines Pilzes aufweist.

6. Notlaufring nach den Ansprüchen 1 und 3, dadurch gekennzeichnet, dass die schmiermittelführenden Rillen (15) im Querschnitt eine in etwa rund-ovale Form aufweisen.

7. Notlaufring nach den Ansprüchen 1 und 4, dadurch gekennzeichnet, dass die beiden umlaufenden Ausnehmungen (17) im Querschnitt rund bis oval sind und der Rücken (16a) des Notlaufrings (16) zwischen den beiden Ausnehmungen (17) parallel zum Bett der Flachbettfelge (5) verläuft und nicht so weit in den Reifeninnenraum (11) hineinragt wie die Zungen (16b) des Notlaufrings (16).

8. Notlaufring nach den Ansprüchen 1 bis 7, dadurch gekennzeichnet, dass der Fussteil (7a) des Notlaufrings (7) gegenüber dessen Oberteil (7b) aus einem verschieden harten Gummi oder anderen Elastomeren besteht und der Fussteil (7a) — wie bei Reifen an sich bekannt — durch Stahldrähte oder Stahldrahtbündel (8) verstärkt ist.

**Revendications**

1. Anneau de sécurité (7, 14, 16) en caoutchouc, ou autre élastomère, pour bandage pneumatique (6) sans chambre à air se montant sur des jantes à base plate (5) de véhicules automobiles, qui repose sur la jante par une semelle (7a) occupant l'espace situé entre les talons du pneumatique (6c) et qui est muni, du côté situé à l'opposé de la jante, d'un lubrifiant logé dans des gorges (13; 15) circulaires qui, à la suite d'une perte de pression se manifestant dans le pneumatique (6), est libéré par la pression exercée par le sommet du pneumatique sur l'anneau de sécurité et qui se répand entre les surfaces en contact de ce dernier et du pneumatique pour les lubrifier, caractérisé en ce que les gorges (13; 15) peuvent être obturées de façon connue en soi au moyen de lèvres d'étanchéité (7d, 14b, 16c) et, lorsque le pneumatique (6) est intact, maintenues fermées par la pression intérieure de gonflage ainsi que sous l'effet d'une contrainte en sens axial, et en ce qu'il est prévu au moins un évidement (12, 17) circulaire en contre-dépouille limité par une partie en contre-dépouille qui constitue des languettes élastiques (7c, 14a, 16c) servant chacune de bras de levier menant qui, sous l'effet de la pression de la bande de roulement et du sommet (6a) sur le sol, est poussé en direction du fond de l'évidement et, par là même, met en position d'ouverture libérant le lubrifiant la lèvre d'étanchéité (7d, 14b, 16c) qui lui est relié et qui joue le rôle de bras de levier mené.

2. Anneau de sécurité selon la revendication 1, caractérisé en ce que les gorges (13) remplies de lubrifiant sont disposées sur les côtés extérieurs de l'anneau de sécurité (7, 16), et en ce que leurs lèvres d'étanchéité (7d, 16c) viennent s'appliquer contre le côté intérieur du pneumatique (6).

3. Anneau de sécurité selon la revendication 1, caractérisé en ce que les gorges (15) remplies de lubrifiant sont disposées chacune entre le côté extérieur de l'anneau de sécurité (14) et une échancrure (17) circulaire médiane, chaque lèvre d'étanchéité (14b) obturant par l'intermédiaire des zones (14c) des bords de l'anneau de sécurité (14), sous l'effet d'une contrainte créée lors du montage du pneumatique, un canal (15a) de sortie de lubrifiant partant de la gorge (15) pour s'ouvrir dans le volume intérieur du pneumatique (11).

4. Anneau de sécurité selon la revendication 1, caractérisé en ce qu'il est prévu deux évidements (17) circulaires en contre-dépouille limités par des languettes (16b) en saillie servant chacune de bras de levier menant, et des appendices latéraux qui constituent les lèvres d'étanchéité (16c) de gorges (13) remplies de lubrifiant et qui servent chacun de bras de levier mené.

5. Anneau de sécurité selon les revendications 1 et 3, caractérisé en ce que l'évidement (12) circulaire disposé au milieu a en coupe transversale un profil en champignon.

6. Anneau de sécurité selon les revendications 1 et 3, caractérisé en ce que les gorges (15) remplies de lubrifiant ont en coupe transversale un profil sensiblement rond ovalisé.

7. Anneau de sécurité selon les revendications 1 et 4, caractérisé en ce que les deux évidements (17) rond à ovale et en ce que le dos (16a) de l'anneau de sécurité (16), qui se trouve entre les deux évidements (17), s'étend parallèlement à la base de la jante à fond plat (5) et ne fait pas saillie à l'intérieur de l'espace intérieur du pneumatique (11) aussi loin que les languettes (16b) de l'anneau de sécurité (16).

8. Anneau de sécurité selon l'une quelconque des revendications 1 à 7, caractérisé en ce que la semelle (7a) de l'anneau de sécurité (7) est faite d'un caoutchouc ou d'un autre élastomère de dureté différente par rapport à la partie supérieure (7b) de ce même anneau de sécurité, et en ce que la semelle (7a) est renforcée par des fils d'acier ou des faisceaux de fil d'acier (8), comme il est connu en soi dans les pneumatiques.

**Claims**

1. Safety support (7, 14, 16) of rubber or other elastomers in tubeless pneumatic tyres (6), fitted on flat-base rims (5), for motor vehicles, whose base (7a) occupying the space between the tyre beads (6c) rests on the rim and whose side remote from the rim is provided with a lubricant which is contained in circumferential grooves (13; 15) and, as a result of loss of air pressure in the tyre (6), is released by the pressure of the tyre cover (6a) upon the safety support and passes between the contiguous surfaces of the pneumatic tyre and the safety support for the purpose of lubrication, characterized in that the grooves (13; 15) are closed by sealing lips (7d, 14b, 16c) in a manner known *per se* and are held closed by the internal pressure of the pneumatic tyre (6) and by axial prestressing when the said tyre is intact, and at least one circumferential undercut recess (12, 17) is provided, whose resilient tongues (7c, 14a, 16b) forming the undercutting act as leverage arms which when subjected to pressure from the tyre cover (6a) are forced towards the bottom of the recess and thus move the sealing lips (7d, 14b, 16c) joined to them as lower work arms into an opening position releasing the lubricant.

2. Safety support according to claim 1, characterized in that the grooves (13) filled with lubricant are located on the outer sides of the safety support (7, 16), the sealing lips (7d, 16c) bearing against the inside of the pneumatic tyre (6).

3. Safety support according to claim 1, characterized in that the grooves (15) filled with lubricant are located in each case between the outer side of the safety support (14) and the central circumferential recess (12), the sealing lips (14b) and the edge areas (14c) of the safety support (14) in each case sealing a lubricant outlet duct (15a) leading from the groove (15) into the interior (11) of the tyre on account of the lateral prestressing produced during assembly of the tyre.

4. Safety support according to claim 1, characterized in that two circumferential undercut recesses (17) are provided, their projecting tongues (16b) being formed as leverage arms in each case and their lateral extensions forming the sealing lips (16c) of the grooves (13) holding the lubricant and acting as lever work arms.

5. Safety support according to claims 1 and 3, characterized in that the centrally arranged circumferential recess (12) has approximately the shape of a mushroom in cross-section.

6. Safety support according to claims 1 and 3, characterized in that the grooves (15) holding the lubricant have an approximately round-oval shape in cross-section.

7. Safety support according to claims 1 and 4, characterized in that the two circumferential recesses (17) are round to oval in cross-section and the back (16a) of the safety support (16) between the two recesses (17) extends parallel to the bed of the flat-base rim (5) and does not extend as far into the interior (11) of the tyre as the tongues (16b) of the safety support (16).

8. Safety support according to claims 1 to 7, characterized in that the base (7a) of the safety support (7) consists of rubber or other elastomers of different hardness from its top portion (7b), and the base (7a)—as known *per se* in the case of tyres—is reinforced by steel wires or steel wire bundles (8).

# Fig. 1

Fig. 2

Fig. 3

# Fig. 4

0 011 698